# EUROPÄISCHE PATENTANMELDUNG

(11) **EP 2 765 034 A1**
(43) Veröffentlichungstag der Anmeldung: **13.08.2014**
(21) Anmeldenummer: 14154131.8
(22) Anmeldetag: 06.02.2014
(51) Int. Cl.: B60R 16/03

(54) **Vorrichtung und Verfahren zum Betreiben einer elektrischen Einheit**

(30) Priorität: 12.02.2013 DE 102013202264
(71) Anmelder: ROBERT BOSCH GMBH, 70442 Stuttgart (DE)
(72) Erfinder: Walter, Klaus, 74321 Bietigheim-Bissingen (DE); Zimanovic, Dimitri, 73760 Ostfildern (DE); Muehlbeyer, Peter, 74360 Ilsfeld (DE); Bennis, Abdelali, 74232 Abstatt (DE); Kurz, Andreas, 74321 Bietigheim (DE)

(57) **Zusammenfassung**

Die Erfindung betrifft eine Vorrichtung (1) zum Betreiben mindestens einer ersten elektrischen Einheit (2), insbesondere Sensormodul (3), mit einer mit einer Energiequelle verbindbaren/verbundenen zweiten elektrischen Einheit (9), insbesondere Steuergerät (10), wobei die erste Einheit (2) und die zweite Einheit (9) durch eine Schnittstelle (11) miteinander verbunden sind, um die erste Einheit (2) durch die zweite Einheit (9) mit Energie zu versorgen, und um Informationen zumindest von der ersten Einheit (2) an die zweite Einheit (9) zu übermitteln. Es ist vorgesehen, dass die erste Einheit (2) einen wiederaufladbaren Energiespeicher (6) aufweist, und dass eine Steuereinheit (7) vorgesehen ist, die die Vorrichtung (1) derart steuert, dass die Schnittstelle (11) in einem ersten Betriebszustand nur den Energiespeicher (6) mit Energie aus der zweiten Einheit (9) versorgt, und in einem zweiten Betriebszustand nur Informationen übermittelt.

## Beschreibung

Die Erfindung betrifft eine Vorrichtung zum Betreiben mindestens einer ersten elektrischen Einheit, insbesondere Sensormodul, mit einer mit einer Energiequelle verbindbaren/verbundenen zweiten elektrischen Einheit, insbesondere Steuergerät, wobei die erste Einheit und die zweite Einheit durch eine Schnittstelle miteinander verbunden sind, um die erste Einheit durch die zweite Einheit mit Energie zu versorgen, und um Informationen zumindest von der ersten Einheit an die zweite Einheit zu übermitteln.

Ferner betrifft die Erfindung ein entsprechendes Verfahren zum Betreiben der mindestens einen ersten elektrischen Einheit.

### Stand der Technik

Vorrichtungen und Verfahren der Eingangs genannten Art sind aus dem Stand der Technik bekannt. Moderne Fahrzeuge, insbesondere Kraftfahrzeuge und Motorräder, weisen Regelsysteme auf, die in Abhängigkeit von Sensordaten Einstellungen, wie beispielsweise das Erhöhen oder Verringern einer Bremskraft im Rahmen eines ESP-Systems, durchführen. Entsprechend benötigen diese Systeme wenigstens einen Sensor, der die Sensordaten liefert. Jeder vorgesehene Sensor stellt gleichzeitig auch einen Energieverbraucher dar, dessen Energieverbrauch sich auf die gesamte Energiebilanz des Fahrzeugs oder zumindest des Systems auswirkt. Die Sensoren stellen somit erste elektrische Einheiten dar, die mit Energie versorgt werden müssen, und deren Sensordaten weitergegeben, beispielsweise an ein Steuergerät übermittelt werden müssen. Meist übernimmt eine zweite elektrische Einheit, beispielsweise das Steuergerät, die Aufgabe der Stromversorgung und der Datenverarbeitung und ist entsprechend mit der ersten Einheit durch eine Schnittstelle verbunden. In der Regel wird die erste Einheit permanent mit einer Versorgungsspannung versorgt oder spätestens durch Betätigung der Zündung des Fahrzeugs aktiviert. Dies führt zu einer permanenten hohen Stromaufnahme. Des Weiteren können Steuergeräte über Schnittstellen, wie beispielsweise CAN-Netzwerke, ein- und ausgeschaltet werden. Diese Verwendung bewirkt in Kraftfahrzeugen hohe Ruheströme und Verlustleistungen, die zu einem steten Entladen der Fahrzeugbatterie führen. Im Fahrzeugbetrieb tragen derartige Systeme, mit aktiv betriebenen elektronischen Verbrauchern beziehungsweise ersten Einheiten, zu einem erhöhten Kraftstoffverbrauch und damit auch zu erhöhten Schadstoffemissionen bei.

### Offenbarung der Erfindung

Die erfindungsgemäße Vorrichtung mit den Merkmalen des Anspruchs 1 hat den Vorteil, dass anstelle einer permanenten Strom- beziehungsweise Energieversorgung der ersten Einheit eine optimierte Energieversorgung in Bezug auf die gesamte Energiebilanz gewährleistet wird. Erfindungsgemäß ist hierzu vorgesehen, dass die erste Einheit einen wiederaufladbaren Energiespeicher aufweist, und dass eine Steuereinheit vorgesehen ist, die die Vorrichtung derart steuert, dass die Schnittstelle in einem ersten Betriebszustand nur den Energiespeicher mit Energie aus der zweiten Einheit versorgt, und in einem zweiten Betriebszustand nur Informationen übermittelt. Es ist also vorgesehen, dass die Energieversorgung und die Informationsvermittlung zwar über die gleiche Schnittstelle, jedoch abwechselnd erfolgen. In der Zeit, in der die Schnittstelle zur Übertragung von Informationen beziehungsweise in den zweiten Betriebszustand geschaltete ist, erfolgt keine Energieversorgung der ersten Einheit, wodurch in dieser Zeit Energie gespart und die Energiebilanz verbessert wird. Insbesondere je nachdem, wie oft die erste Einheit zur Übermittlung von Informationen angesteuert wird, kann der zweite Betriebszustand beibehalten werden. Vorzugsweise ist vorgesehen, dass automatisch in den zweiten Betriebszustand gewechselt wird, wenn der Energiespeicher ausreichend gefüllt ist beziehungsweise eine vorgebbare Soll-Ladung erreicht hat. Besonders bevorzugt ist die Vorrichtung derart ausgebildet, dass im zweiten Betriebszustand die erste Einheit Informationen an die zweite Einheit erst dann übermittelt, wenn dies durch die zweite Einheit angefordert wird, wobei die Anforderung bevorzugt durch Übermittlung einer entsprechenden Information oder eines entsprechenden Befehls durch ein Signal über die Schnittstelle an die erste Einheit erfolgt. Vorzugsweise bildet die erfindungsgemäße Vorrichtung zusammen mit der mindestens einen ersten Einheit ein Sensorsystem, insbesondere für ein Kraftfahrzeug.

Gemäß einer bevorzugten Weiterbildung der Erfindung ist vorgesehen, dass die Vorrichtung mindestens zwei oder mehr erste elektrische Einheiten aufweist, die durch die Schnittstelle mit der zweiten elektrischen Einheit verbunden oder verbindbar sind. Vorzugsweise spricht dann die zweite Einheit alle ersten Einheiten gleichzeitig an, wobei besonders bevorzugt durch das von der zweiten Einheit ausgegebene Signal eine Bestimmte der ersten Einheit gezielt ansprechbar ist, beispielsweise durch eine entsprechende Codierung des Signals, um nur eine der ersten elektrischen Einheiten zu aktivieren beziehungsweise den Betriebszustand zu ändern. Alternativ werden alle ersten Einheiten gleichzeitig angesprochen und aktiviert beziehungsweise im Betriebszustand verändert.

In einer bevorzugten Weiterbildung der Erfindung ist vorgesehen, dass die erste Einheit die Steuereinheit aufweist. Die Steuereinheit ist somit Bestandteil der ersten Einheit und in diese integriert. Damit bestimmt die erste Einheit bevorzugt selbst, ob der erste oder der zweite Betriebszustand vorliegen soll. Insbesondere bei einem Betriebszustandwechsel in Abhängigkeit von dem Ladezustand des Energiespeichers ist diese Anordnung von Vorteil, da hierdurch die Steuereinheit direkten Zugriff auf den Energiespeicher hat, um dessen Ladezustand insbesondere laufend zu überwachen.

Gemäß einer vorteilhaften Weiterbildung der Erfindung ist vorgesehen, dass der Energiespeicher als Kondensator ausgebildet ist. Der Energiespeicher ist bevorzugt derart dimensioniert, dass er derart viel Ladung aufnimmt, wie die erste Einheit in dem zweiten Betriebszustand benötigt, um Informationen zu senden und/oder zu empfangen oder insbesondere einen Sensorvorgang zur Generierung zu übersendenden Informationen durchführen zu können.

Vorzugsweise ist die Schnittstelle als 2-Draht-Schnittstelle ausgebildet. Die erste und die zweite Einheit sind somit lediglich über zwei Drähte beziehungsweise Drahtleitungen miteinander verbunden, über welche sowohl die Kommunikation als auch Energieversorgung in Abhängigkeit des jeweils eingestellten Betriebszustandes stattfindet. Durch die 2-Draht-Schnittstelle und den erfindungsgemäßen Aufbau der Vorrichtung entfällt die sonst üblicherweise vorgesehene dritte oder vierte Drahtverbindung, über welche parallel zu einem Informationsaustausch gleichzeitig eine Energieversorgung stattfinden kann.

Das erfindungsgemäße Verfahren mit den Merkmalen des Anspruchs 5 zeichnet sich dadurch aus, dass die erste Einheit einen wiederaufladbaren Energiespeicher aufweist, der nur in einem ersten Betriebszustand über die Schnittstelle mit Energie versorgt wird, und dass in einem zweiten Betriebszustand durch die Schnittstelle nur Informationen übermittelt werden. Es ergeben sich hierdurch die oben bereits genannten Vorteile.

Vorzugsweise wird im ersten Betriebszustand der Ladezustand des Energiespeichers überwacht und bei Erfassen eines vorgebbaren Soll-Ladezustandes von dem ersten Betriebszustand in den zweiten Betriebszustand gewechselt. Zweckmäßigerweise wird dies durch die Steuereinheit bewirkt. Der zweite Betriebszustand wird zumindest solange beibehalten, bis der Ladezustand des Energiespeichers einen kritischen Wert unterschreitet.

Vorzugsweise wird in einem dritten Betriebszustand die erste Einheit in einen Schlafmodus geschaltet, in welchem insbesondere weder der Energiespeicher aufgeladen noch eine Information durch die erste Einheit erfasst und über die Schnittstelle an die zweite Einheit übermittelt wird. Der dritte Betriebszustand trägt insbesondere dazu bei, dass es insgesamt zu einer Reduzierung des Stromverbrauchs der ersten Einheit und damit auch des gesamten Systems kommt. Wobei die Stromeinsparung logischerweise umso größer ist, umso länger sich die erste Einheit in dem dritten Betriebszustand befindet. Vorzugsweise wird der dritte Betriebszustand derart lange beibehalten, bis die erste Einheit eine entsprechende Information oder ein entsprechendes Signal von der zweiten Einheit erhält. Je nachdem, ob zuvor der erste oder der zweite Betriebszustand eingeschaltet war, wird dann aus dem dritten Betriebszustand in den zweiten oder den ersten Betriebszustand gewechselt.

Gemäß einer vorteilhaften Weiterbildung der Erfindung ist vorgesehen, dass einerseits nach einer ersten vorgebbaren Zeitdauer von dem ersten Betriebszustand in den zweiten oder in den dritten Betriebszustand und/oder andererseits nach einer zweiten vorgebbaren Zeitdauer von dem zweiten Betriebszustand in den ersten oder dritten Betriebszustand gewechselt wird. Gemäß einer weiteren Ausführungsform wird der Betriebszustandswechsel sowohl in Abhängigkeit vom Ladezustand des Energiespeichers als auch von der jeweils vorgebbaren Zeitdauer gesteuert, je nachdem, ob zunächst die vorgebbare Zeitdauer oder der jeweils vorgebbare obere oder untere Grenzwert des Ladezustands erreicht wird.

Bevorzugt ist vorgesehen, dass die zweite Einheit im zweiten Betriebszustand als Information einen Aktivierungsbefehl übermittelt, die erste Einheit nach Erhalt des Aktivierungsbefehls einen vorgebbaren Vorgang, insbesondere einen Sensorvorgang, durchführt, und anschließend eine Information als Ergebnis des Vorgangs an die zweite Einheit übermittelt. Die erste Einheit beziehungsweise der Vorgang der ersten Einheit wird somit durch einen Befehl der zweiten Einheit getriggert. Befindet sich die Vorrichtung im zweiten Betriebszustand, also im Kommunikationszustand, kann die zweite Einheit den Aktivierungsbefehl auf einfache Art und Weise an die erste Einheit übermitteln. Dadurch wird gewährleistet, dass die zweite Einheit den Aktivierungsbefehl beziehungsweise das Aktivierungssignal nur dann übermitteln kann, wenn die erste Einheit zur Durchführung des vorgebbaren Vorgangs in der Lage ist.

Vorzugsweise erfolgt nach dem Übermitteln der Information von der ersten an die zweite Einheit ein Betriebszustandswechsel in den ersten Betriebszustand, um den Energiespeicher der ersten Einheit wieder aufzuladen und damit die erste Einheit für einen weiteren Informationsübermittlungsvorgang bereitzustellen, oder in den dritten Betriebszustand, um Energie zu sparen.

Weiterhin ist bevorzugt vorgesehen, dass die erste Einheit im zweiten Betriebszustand durch den wiederaufladbaren Energiespeicher mit Energie, insbesondere zur Durchführung des vorgebbaren Vorgangs, versorgt wird. Die erste Einheit ist somit ein geschlossenes System, dass im zweiten Betriebszustand aus dem bevorzugt internen Energiespeicher die zur Durchführung des Vorgangs notwendige Energie bezieht.

Im Folgenden soll die Erfindung anhand der Zeichnung näher erläutert werden. Dazu zeigen:
- Figur 1: eine Vorrichtung zum Betreiben einer ersten elektrischen Einheit,
- Figur 2: ein Verfahren zum Betreiben der Vorrichtung als Flussdiagramm und
- Figur 3: ein Flussdiagramm für eine alternative Betriebsart der Vorrichtung.

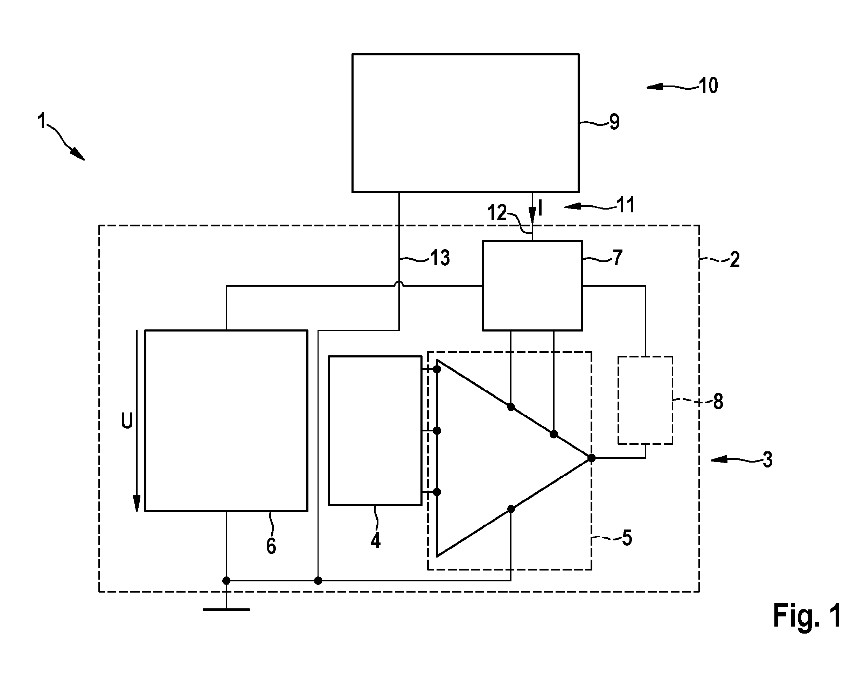

Figur 1 zeigt ein Blockschaltbild einer Vorrichtung 1 zum Betreiben einer ersten elektrischen Einheit 2. Die elektrische Einheit 2 ist dabei als Sensormodul 3 ausgebildet, das eine Messeinrichtung 4 sowie eine Daten der Messeinrichtung 4 verarbeitende Verarbeitungseinheit 5, die vorliegend als integrierte Schaltung ausgebildet ist, aufweist. Das Sensormodul 3 dient beispielsweise zum Erfassen von Sensordaten, kann also beispielsweise als Drucksensor, Weg-, Winkel-Geber oder dergleichen ausgebildet sein.

Die Vorrichtung 1 weist weiterhin einen wiederaufladbaren Energiespeicher 6 auf, der in dem vorliegenden Ausführungsbeispiel als Kondensator ausgebildet ist. Weiterhin weist die Vorrichtung 1 eine Steuereinheit 7 auf, die mit dem Energiespeicher 6 und der Verarbeitungseinrichtung 5 verbunden ist. Optional ist die Steuereinheit 7 außerdem über eine Entkopplungsschaltung 8 (hier nur gestrichelt angedeutet) mit der Verarbeitungseinrichtung verbunden. Außerdem weist die Vorrichtung 1 eine zweite elektrische Einheit 9 auf, die als Steuergerät 10 ausgebildet und durch eine 2-Draht-Schnittstelle 11 mit der ersten elektrischen Einheit 2 beziehungsweise mit dem Sensormodul 3 verbunden ist. Die 2-Draht-Schnmittstelle 11 weist zwei Drahtleitungen 12, 13 auf, von denen die eine das Steuergerät 10 mit der Steuereinheit 7 verbindet, und die andere das Steuergerät 10 mit dem Massenanschluss der ersten elektrischen Einheit 2.

Die Vorrichtung sieht vor, dass sie in zwei unterschiedlichen Betriebszuständen betrieben werden kann, nämlich in einem Ladezyklus und in einem Kommunikationszyklus, so dass durch die 2-Draht-Schnittstelle 11 entweder eine Energieversorgung stattfindet oder eine Informationsübermittlung. Während des Ladezyklus wird dem Energiespeicher 6 ein Ladestrom I zugeführt, während im Kommunikationszyklus mindestens ein wenigstens eine Information aufweisendes Signal zwischen der elektrischen Einheit 2 und der elektrischen Einheit 9 ausgetauscht wird. Die Steuereinheit 7 schaltet dabei zwischen den beiden Betriebszuständen um. Dies soll anhand des folgenden Beispiels näher erläutert werden.

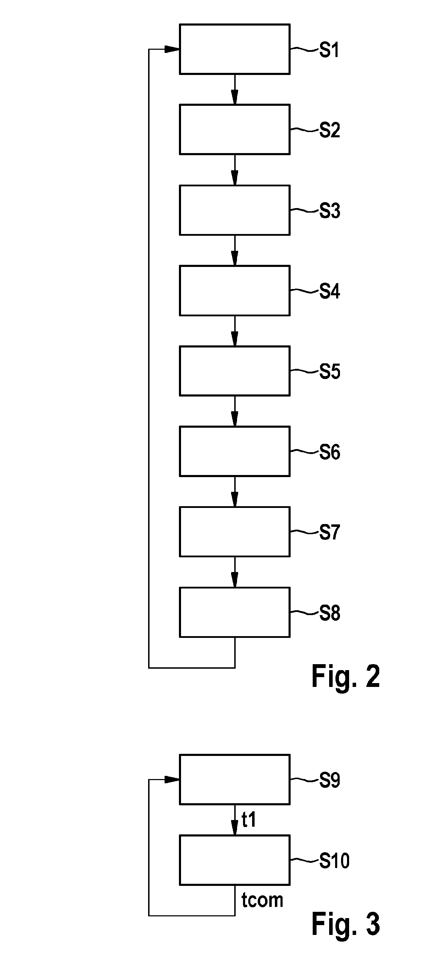

Figur 2 zeigt in einem Flussdiagramm einen beispielhaften Funktionsablauf der Vorrichtung 1 gemäß einem ersten Ausführungsbeispiel.

Ausgegangen wird in Schritt S1 von einem ersten Betriebszustand, in welchem über die Schnittstelle 11 der Energiespeicher 6 durch beziehungsweise mittels des Steuergeräts 10 aufgeladen wird. In diesem eingestellten Betriebszustand wird somit die 2-Draht-Schnittstelle einzig zur Energieversorgung genutzt.

Anschließend wird in dem ersten Betriebszustand in dem darauffolgenden Schritt S2 der Ladezustand des Energiespeichers 6 überwacht und mit einem vorgebbaren Soll-Ladezustand verglichen. Erkennt die Steuereinheit 7, dass der Soll-Ladezustand erreicht oder ein vorgebbarer Mindest-Ladezustand überschritten ist, schaltet sie in einem Schritt S3 die Spannungsversorgung zu der Energiespeichereinheit 6 ab und überprüft in einem folgenden Schritt S4, ob die Spannungsversorgung zu dem Energiespeicher 6 tatsächlich unterbrochen wurde beziehungsweise ob die Versorgungsspannung abgenommen hat. Der Schritt S4 ist dabei als optionaler Schritt zur Plausibilisierung und Erhöhung der Sicherheit zu verstehen.

Anschließend schaltet die Steuereinheit 7 die Vorrichtung 1 in den zweiten Betriebszustand beziehungsweise in den Kommunikationsmodus/-Zyklus. Vorzugsweise weist das Steuergerät 10 eine Einrichtung zum Erfassen des Betriebszustandes auf, beispielsweise indem das Steuergerät 10 die der Einheit 2 bereitgestellte Versorgungsspannung oder seine eigene Stromaufnahme von einer Energiequelle, wie beispielsweise einer Fahrzeugbatterie, überwacht. Stellt das Steuergerät 10 fest, dass die Stromaufnahme reduziert oder die Versorgungsspannung unterbrochen wurde, schaltet auch das Steuergerät 10 in den zweiten Betriebszustand beziehungsweise in einen Kommunikationsmodus.

In dem zweiten Betriebszustand wird das Sensormodul 3 durch den Energiespeicher 6 mit elektrischer Energie versorgt, um wenigstens einen Sensorvorgang beziehungsweise Messvorgang mittels der Messeinrichtung 4 durchzuführen. Der Messvorgang kann dabei durch das Steuergerät 10 oder zeitgesteuert eingeleitet werden. Im ersten Fall sendet im Kommunikationsmodus das Steuergerät 10 ein entsprechendes Startsignal an die Steuereinheit 7, die daraufhin die Messeinrichtung 4 dazu ansteuert, den Messvorgang durchzuführen, wobei das Ergebnis der Messeinrichtung durch die Überarbeitungseinheit 5 anschließend aufbereitet und zurück an die Steuereinheit 7 geleitet wird. Die Steuereinheit 7 wiederum sendet die aufbereiteten Informationen über die 2-Draht-Schnittstelle 11 an das Steuergerät 10, wo die Informationen entsprechend ausgewertet werden können.

Nachdem die Einheit 2 die Informationen übermittelt hat, teilt sie in einem Schritt S6 dem Steuergerät 10 bevorzugt durch eine letzte Informationsübermittlung das Ende des Kommunikationsmodus mit und schaltet daraufhin im folgenden Schritt S7 zurück in den ersten Betriebszustand beziehungsweise in den Lademodus.

In diesem schaltet die Steuereinheit 7 im Schritt S8 die Versorgungsspannung für den Energiespeicher 6 wieder ein, so dass dieser erneut aufgeladen wird, womit der Ablauf erneut beginnt

Alternativ ist gemäß einem weiteren, hier nicht dargestellten Ausführungsbeispiel vorgesehen, dass in dem Schritt S7 nicht zurück in den ersten Betriebszustand sondern in einen dritten Betriebzustand gewechselt wird, in welchem ein Schlafmodus eingeschaltet ist, so dass über die Schnittstelle weder Informationen an die zweite Einheit 9 gesendet oder ein Ladevorgang durchgeführt wird. In dem Schlafmodus wird Energie gespart. Der Schlafmodus beziehungsweise der dritte Betriebszustand wird dabei vorzugsweise derart lang beibehalten, bis von der Einheit 9 ein Aktivierungssignal durch die Schnittstelle 11 an die elektrische Einheit 2 übermittelt, durch welche die Einheit 2 entweder in den ersten Betriebszustand oder, falls sich die elektrische Einheit 2 vor dem Wechsel in den dritten Betriebszustand bereits in dem ersten Betriebszustand befunden hat, in den zweiten Betriebszustand wechselt. Weist das die Einheit 2 und die Steuereinheit 7 aufweisende System weitere elektrische Einheiten auf, die gemäß der elektrischen Einheit 2 ausgebildet sind, so kann die zweite elektrische Einheit 9 durch die Zwei-Draht-Schnittstelle 11 mit allen ersten elektrischen Einheiten 2 gleichzeitig oder durch Übermitteln eines codierten Signals eine Bestimmte der ersten elektrischen Einheiten ansteuern beziehungsweise triggern.

Figur 3 zeigt ein alternatives Ausführungsbeispiel des Verfahrens, bei welchem ein zeitgesteuerter Ablauf vorgenommen wird. Dabei ist außerdem vorgesehen, dass der Energiespeicher 6 derart dimensioniert ist, dass er derart viel Ladung aufnimmt, wie für eine Zeit t1 für die Erfassung, gegebenenfalls Berechnung und gegebenenfalls Umwandlung eines Messwertes der Messeinrichtung 4 durch die Verarbeitungseinheit 5 notwendig ist. Darüber hinaus muss genug Energie im Energiespeicher 6 verbleiben, um die Kommunikation zwischen der Einheit 2 und der Einheit 9 innerhalb einer vorgebbaren Zeit tcom zumindest zum Übermitteln einer oder mehrerer Informationen von der ersten Einheit 2 an die Einheit 9, zu ermöglichen. Da die Zeit t1 aus der Schaltungsdimensionierung der Einheit 2 bekannt ist, und da die Zeit tcom durch das angewendete Datenprotokoll bestimmt wird, kann die elektrische Einheit 9 automatisch nach Ablauf der Zeiten t1 und tcom durch die Steuereinheit 7 wieder beginnen, den Energiespeicher aufzuladen. Die Steuereinheit 7 übernimmt dabei das Umschalten dahingehend, dass die Versorgungsspannung beziehungsweise der Ladestrom I für den Energiespeicher 6 bereitgestellt wird. Das Verfahren gemäß dem alternativen Ausführungsbeispiel gestaltet sich daher derart, dass zunächst in einem ersten Schritt S9 der Energiespeicher 6 aufgeladen wird. Dann wir die Verarbeitungseinheit 5 sowie die Messeinrichtung 4 eingeschaltet, um den Messvorgang innerhalb der Zeit t1 durchzuführen. Anschließend wird der Kommunikationsmodus in einem Schritt S10 aktiviert und für die Zeit tcom aufrechterhalten, um die erfassten Informationen an das Steuergerät 10 zu übermitteln.

Auch gemäß dem Ausführungsbeispiel von Figur 3 kann vorgesehen sein, dass das System beziehungsweise die zumindest eine erste elektrische Einheit 2 in einen dritten Betriebszustand geschaltet wird, in welcher der oben beschriebene Schlafmodus vorliegt. In diesem Fall wird die Dauer des Schlafmodus bevorzugt ebenfalls zeitgesteuert.

Da die Versorgungsspannung und der Informationsaustausch über die gleichen Drahtleitungen 12, 13 durch die 2-Draht-Schnittstelle durchgeführt wird, ist die Anzahl der Drahtleitungen 12, 13 auf zwei reduziert, wodurch Kosten- und Bauraumvorteile erzielt werden. Darüber hinaus ist die Leistungsaufnahme und Eigenerwärmung der elektrischen Einheit 9 beziehungsweise des Steuergeräts 10 durch den Einsatz des Energiespeichers 6 verringert, wodurch der Kraftstoffverbrauch und Schadstoffemissionen gesenkt werden. Gemäß einem weiteren Ausführungsbeispiel wird bevorzugt die Steuereinheit 7 durch ein Steuersignal gesteuert und schaltet unmittelbar nach einer Datenkommunikation/Informationsübertragung oder zeitversetzt zwischen dem Energiespeicher 6 und dem Steuergerät 10 als Energiequelle um. Die optionale Entkopplungsschaltung 8 stellt die Kommunikation zwischen der Verarbeitungseinrichtung 5 und der Steuereinheit 7 und damit mit dem Steuergerät 10 sicher. Zur Versorgungszeit t1 sorgt die Entkopplungsschaltung 8 für eine Entkopplung der Verarbeitungseinrichtung 5 von dem Steuergerät 10.

## Patentansprüche

1. Vorrichtung (1) zum Betreiben mindestens einer ersten elektrischen Einheit (2), insbesondere Sensormodul (3), mit einer mit einer Energiequelle verbindbaren/verbundenen zweiten elektrischen Einheit (9), insbesondere Steuergerät (10), wobei die erste Einheit (2) und die zweite Einheit (9) durch eine Schnittstelle (11) miteinander verbunden sind, um die erste Einheit (2) durch die zweite Einheit (9) mit Energie zu versorgen, und um Informationen zumindest von der ersten Einheit (2) an die zweite Einheit (9) zu übermitteln, **dadurch gekennzeichnet, dass** die erste Einheit (2) einen wiederaufladbaren Energiespeicher (6) aufweist, und dass eine Steuereinheit (7) vorgesehen ist, die die Vorrichtung (1) derart steuert, dass die Schnittstelle (11) in einem ersten Betriebszustand nur den Energiespeicher (6) mit Energie aus der zweiten Einheit (9) versorgt, und in einem zweiten Betriebszustand nur Informationen übermittelt.

2. Vorrichtung nach Anspruch 1, **dadurch gekennzeichnet, dass** die erste Einheit (2) die Steuereinheit (7) aufweist.

3. Vorrichtung nach einem der vorhergehenden Ansprüche, **dadurch gekennzeichnet, dass** der Energiespeicher (6) als Kondensator ausgebildet ist.

4. Vorrichtung nach einem der vorhergehenden Ansprüche, **dadurch gekennzeichnet, dass** die Schnittstelle (11) eine 2-Draht-Schnittstelle (11) ist.

5. Verfahren zum Betreiben mindestens einer ersten elektrischen Einheit (2), insbesondere mit einer Vorrichtung (1) nach einem oder mehreren der vorhergehenden Ansprüche, wobei die erste Einheit (2), insbesondere Sensormodul (3), durch eine zweite elektrische Einheit (9), insbesondere Steuergerät (10), über eine Schnittstelle (11) mit Energie versorgt wird, und wobei über diese Schnittstelle (11) Informationen zumindest von der ersten Einheit (2) an die zweite Einheit (9) übermittelt werden, **dadurch gekennzeichnet, dass** die erste Einheit (2) einen wiederaufladbaren Energiespeicher (6) aufweist, der nur in einem ersten Betriebszustand über die Schnittstelle (11) mit Energie versorgt wird, und dass in einem zweiten Betriebszustand über die Schnittstelle (11) nur Informationen übermittelt werden.

6. Verfahren nach Anspruch 5, **dadurch gekennzeichnet, dass** im ersten Betriebszustand der Ladezustand des Energiespeichers (6) überwacht und bei Erfassen eines vorgebbaren Soll-Ladezustands von dem ersten Betriebszustand in den zweiten Betriebszustand gewechselt wird.

7. Verfahren nach einem der vorhergehenden Ansprüche, **dadurch gekennzeichnet, dass** in einem dritten Betriebszustand die erste Einheit (2) in einen Schlafmodus geschaltet wird, in welchem insbesondere weder der Energiespeicher aufgeladen noch eine Information von der ersten Einheit (2) an die zweite Einheit (9) über die Schnittstelle übermittelt wird.

8. Verfahren nach einem der vorhergehenden Ansprüche, **dadurch gekennzeichnet, dass** einerseits nach einer ersten vorgebbaren Zeitdauer von dem ersten Betriebszustand in den zweiten Betriebszustand oder in den dritten Betriebszustand und/oder andererseits nach einer zweiten vorgebbaren Zeitdauer von dem zweiten Betriebszustand in den ersten Betriebszustand oder in den dritten Betriebszustand gewechselt wird.

9. Verfahren nach einem der vorhergehenden Ansprüche, **dadurch gekennzeichnet, dass** die zweite Einheit (9) im zweiten Betriebszustand als Information einen Aktivierungsbefehl übermittelt, die erste Einheit (2) nach Erhalt des Aktivierungsbefehls einen vorgebbaren Vorgang, insbesondere Sensorvorgang, durchführt, anschließend Informationen als Ergebnis des Vorgangs an die zweite Einheit (9) übermittelt.

10. Verfahren nach Anspruch 8, **dadurch gekennzeichnet, dass** im Anschluss an die Übermittlung der Informationen an die zweite Einheit (9) in den ersten oder in den dritten Betriebszustand gewechselt wird.

11. Verfahren nach einem der vorhergehenden Ansprüche, **dadurch gekennzeichnet, dass** die erste Einheit (2) im zweiten Betriebszustand durch den wiederaufladbaren Energiespeicher (6) mit Energie, insbesondere zur Durchführung des vorgebbaren Vorgangs, versorgt wird.
